# EUROPEAN PATENT APPLICATION

(11) **EP 4 718 478 A1**
(43) Date of publication of application: **01.04.2026**
(21) Application number: 24383047.8
(22) Date of filing: 30.09.2024
(51) Int. Cl.: H01F 13/00, H02K 15/03

(54) **MAGNETIZING PERMANENT MAGNET MODULES**

(71) Applicant: Ge Vernova Renovables España, S.L., 08005 Barcelona (ES)
(72) Inventor: URRESTY, Julio César, 08005 Barcelona (ES); GIRBAU LLONCH, Gerard, 08005 Barcelona (ES); FERNÁNDEZ, Raúl, 08005 Barcelona (ES)
(74) Representative: Bardehle Pagenberg S.L.

(57) **Abstract**

The present disclosure relates to methods for magnetizing sections of one or more permanent magnets arranged substantially in a V-shape. The methods comprise applying a first magnetic field comprising activating (402) an open end magnetizing coil (61) arranged near an open end of the V-shape and generating a first magnetic flux (MF61), activating (404) a first side magnetizing coil (63) arranged at a first side of a first leg (41) of the V-shape and generating a second magnetic flux (MF63), and activating (406) a second side magnetizing coil (62) arranged at a second side of a second leg (42) of the V-shape and generating a third magnetic flux (MF62). The magnetizing coils are simultaneously activated, and the second side magnetizing coil is activated in reversed polarity to the first side magnetizing coil.

## Description

### FIELD

The present disclosure relates to methods and systems for magnetizing permanent magnets. The present disclosure relates in particular to methods and systems for magnetizing permanent magnet modules for an electrical machine, specifically for a generator, and more specifically for a wind turbine generator.

### BACKGROUND

Electrical machines, such as motors and generators, generally comprise a rotor structure and a stator structure. In case of electrical machines employing permanent magnets, permanent magnets (PM) are generally comprised in the rotor (although they could also be arranged alternatively in the stator structure), whereas winding elements (e.g. coils) are usually included in the stator (although they could alternatively be arranged in the rotor structure).

In the case of a PM generator with magnets on the rotor, rotation of the rotor structure under the influence of an external force creates a changing magnetic field in the windings, whereby electrical power may be generated. In the case of a motor, electrical power is supplied to the windings in order to set the rotor in motion. Permanent magnet generators are generally deemed to be reliable and require less maintenance than other generator typologies.

Permanent magnet generators may be used for example in wind turbines, in particular in offshore wind turbines. The prospect of less maintenance makes permanent magnet generators an attractive option specifically for offshore wind turbines.

Wind turbines generally comprise a rotor with a rotor hub and a plurality of blades. The rotor is set into rotation under the influence of the wind on the blades. The rotation of the rotor shaft either directly drives the generator rotor ("directly driven") or through the use of a gearbox. Such a direct drive wind turbine generator may have e.g. a diameter of 6 - 8 meters (236 - 315 inches), a length of e.g. 2 - 3 meters (79 - 118 inches) and may rotate at low speed, for example in the range of 2 to 20 rpm (revolutions per minute). Alternatively, permanent magnet generators may also be coupled to a gearbox which increases the rotational speed of the generator to for example between 50 to 500 rpm or even more.

Permanent magnets may be provided in permanent magnet modules, which may be attached to the rotor as a single item. A permanent magnet module may be defined as a unit having a plurality of permanent magnets, such that the plurality of magnets can be mounted to and unmounted together from a rotor of an electrical machine. Such a module may have a module base with a shape suitable for housing or carrying a plurality of permanent magnets that may be fixed to the base. The base may be configured to be fixed to a rotor rim in such a way that the plurality of magnets are fixed together to the rotor rim through the module base. The use of permanent magnet modules may thus facilitate the manufacturing of a rotor. The use of permanent magnet modules may also facilitate maintenance of the rotor: in case of a problem with a magnet, the magnet module may be disassembled and replaced by a new module.

Permanent magnet modules may have a module base formed as a stack of metal sheets which may be separated from each other by means of electrically insulating material. With this feature, magnetic losses, for example eddy currents, might be reduced in the corresponding electrical machine such that its efficiency may be improved.

Permanent magnets of direct drive offshore wind turbines are generally arranged on the permanent magnet module in a flat configuration or in V-shape configuration. However, these magnet configurations are not limited to generators in direct drive offshore applications and not even to the field of wind turbines only. Generators of considerable dimensions that may have similar configurations may also be found e.g. in steam turbines and water turbines.

In flat configurations, the permanent magnets may be mounted substantially parallel with respect to a (local) radial direction, i.e. the direction extending radially from the center of the rotor to the module, on a flat or tangential surface of the base. Magnets are generally glued to the base and may be additionally covered by a plate to improve the fixation to the base. All the magnets within a module typically have the same magnetic orientation, i.e. the North of all the magnets face towards the stator, and the magnetic orientation of the neighboring module is the opposite, as to have a radial magnetic configuration. Compared to other configurations, in flat or tangential configurations the area of the permanent magnets is generally bigger. However, permanent magnets may occasionally become detached from the base due to adhesive failure, especially in applications having a long life expectancy or working in a corrosive atmosphere as for example in wind turbines, in particular in offshore wind turbines.

In magnet modules having a V-shape configuration, the magnet modules are arranged inclined with respect to the (local) radial direction, i.e. the direction extending radially from the center of the rotor to (and through) a center of the module. In these configurations, magnets may be embedded in the base or clamped between the base and a central support fixed to the base. In these configurations, the permanent magnets may have a circumferential magnetic orientation (also sometimes referred to as "transversal" or "tangential" flux orientation). Magnetic fields and operation may be more efficient in V-shape configurations since the magnetic flux is more concentrated. However, such configurations generally require more space and may thus have a lower utilization of the module.

V-shape as used throughout the present disclosure may be regarded as any shape of magnets resembling a shape of the letter V, or of the letter V when inverted. A V-shape implies that the permanent magnets form at least two legs, which are inclined with respect to each other, i.e. they are closer to each other on one end, and further away from each other at an opposite end of the magnets. The two legs of the permanent magnets in a permanent magnet module may be closer to each other at a side close to the base of a permanent magnet module, or instead may be closer at a side close to an airgap of an electrical machine.

A permanent magnet module may include a horizontal portion in between the two inclined legs. This is still to be considered as covered by the word V-shape.

A V-shape as used throughout the present disclosure should also be understood to cover magnet arrangements covering more than a single "V". For example, permanent magnet modules including permanent magnets arranged in a W-shape, i.e. two "V"'s next to each other should also be considered to be covered.

Magnets used in permanent magnet modules need to be magnetized prior to use. For permanent magnet modules employing a V-shape configuration, generally pre-magnetization is used. Pre-magnetization means that the magnets are magnetized prior to assembly of the permanent magnet module. Pre-magnetization complicates the assembly process because of attracting and repelling forces between different parts. Also e.g. transport of pre-magnetized modules is more complicated, as it requires additional spacing and special packaging.

For magnet modules with magnets of substantially V-shaped cross-section, pre-magnetization is nonetheless often used, since post-magnetization (i.e. magnetization of the magnets after assembly with the rest of the module) is complicated. It generally requires a strong magnetic field, and high amounts of energy and still, magnetization may not be complete.

EP 3 923 305 discloses a method for magnetizing a section of one or more permanent magnets arranged in a V-shape comprising applying a first magnetic field such that magnetic flux lines are substantially perpendicular to a first leg of the V-shape, removing the first magnetic field, and applying a second magnetic field such that magnetic flux lines are substantially perpendicular to a second leg of the V-shape.

The present disclosure provides systems and methods to at least partially overcome some of the aforementioned drawbacks.

### SUMMARY

In an aspect of the present disclosure, a method for magnetizing a section of one or more permanent magnets arranged substantially in a V-shape is provided. The method comprises applying a first magnetic field, comprising activating an open end magnetizing coil arranged near an open end of the V-shape and generating a first magnetic flux, activating a first side magnetizing coil arranged at a first side of a first leg of the V-shape and generating a second magnetic flux, and activating a second side magnetizing coil arranged at a second side of a second leg of the V-shape and generating a third magnetic flux. The magnetizing coils are simultaneously activated and the second side coil is activated in reversed polarity to the first side coil.

A strong magnetization of the permanent magnets may be achieved while the permanent magnet module and magnetizing assembly are subjected to significantly smaller forces, leading to a prevention of damage of the magnets and of the magnetizing coils. Accordingly, a more reliable magnetizing process may be provided.

The activation of one of the coils in reversed polarity does not significantly affect the magnetization of the magnets but generates an opposing force, reducing the forces applied more than a 50 % as compared to other prior art magnetizing methods, specifically reducing the forces applied up to a 66% as compared to other prior art magnetizing methods. The magnetizing coils may be designed with less mechanical complexity, as they will have to withstand lower forces during the magnetization process. The maximum lifetime of the magnetizing coils and magnetizing assembly may be increased and an improved method to post magnetize permanent magnets may be provided.

Throughput the present disclosure, activating a coil in reversed polarity may refer to changing the direction of electrical current flow in the coil i.e. such that current may flow in an opposite direction as compared to the direction of the currents flowing in the other coils.

In another aspect of the present disclosure, a method for magnetizing a permanent magnet module having one or more magnets substantially in a V-shape including a first leg and a second leg is provided. The method comprises positioning the permanent magnet module such that a section of the permanent magnet module is positioned below an upper magnetizing coil and between a first side magnetizing coil and a second side magnetizing coil. In a first step, the method comprises simultaneously energizing the upper magnetizing coil, the first side magnetizing coil and the second side magnetizing coil, wherein the first side magnetizing coil has opposed polarity to the second magnetizing coil. The method further comprises subsequently, in a second step, simultaneously energizing the upper magnetizing coil, the first side magnetizing coil and the second side magnetizing coil, wherein the first and second side magnetizing coils have opposed polarity to the first step.

In yet a further aspect, a system is provided, which comprises a fixture made of magnetic material and comprising a passage for receiving a permanent magnet module comprising permanent magnets arranged in a V-shape having a first leg and a second leg and an open end between the first and second legs, and further comprising an open end magnetizing coil arranged to be near the open end of the V-shape when the permanent magnet module is arranged in the passage, a first side magnetizing coil on a first side of the passage arranged substantially parallel to the first leg when the permanent magnet module is arranged in the passage, and a second magnetizing coil on a second side of the passage arranged substantially parallel to the second leg when the permanent magnet module is arranged in the passage.

The system further comprises a control system configured to energize the open end magnetizing coil, the first side magnetizing coil, and the second side magnetizing coil to apply a first magnetic field to magnetize the first leg, and configured to energize the open end magnetizing coil, the first side magnetizing coil and the second side magnetizing coil to apply a second magnetic field to magnetize the second leg, and wherein the first and second side magnetizing coils are activated with opposing polarity when applying the first and second magnetic fields.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 schematically illustrates a system for magnetizing a permanent magnet module;
Figure 4 shows a flow chart of an example of a method for magnetizing a section of one or more permanent magnets arranged substantially in a V-shape;
Figure 5A schematically illustrates the direction of magnetic fluxes MF created by activated coils according to an example of the present disclosure;
Figure 5B schematically illustrates magnetic flux lines in accordance with the example of figure 5A; and
Figure 6 schematically illustrates the direction of magnetic fluxes MF created by activated coils according to another example of the present disclosure.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

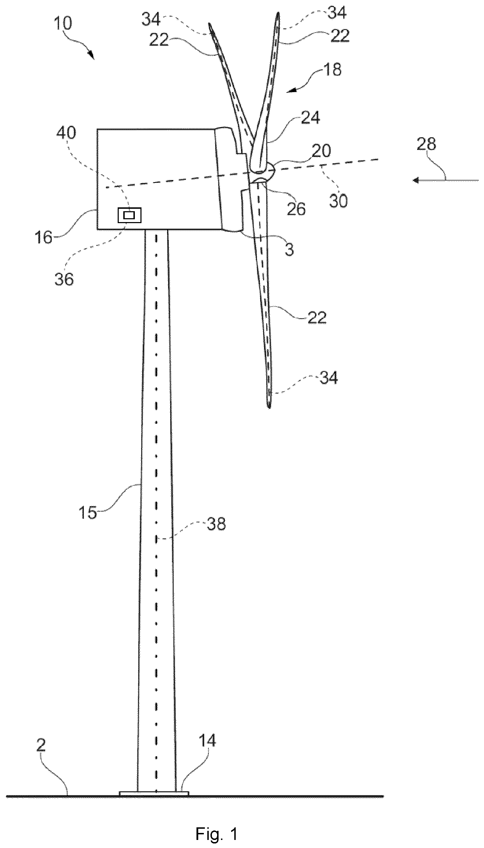

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 2, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system. Alternatively, the blade pitch for all rotor blades 22 may be controlled simultaneously by said control systems.

Further, in the example, as the wind direction 28 changes, a nacelle 16 may be rotated about a yaw axis 38 to position the rotor with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

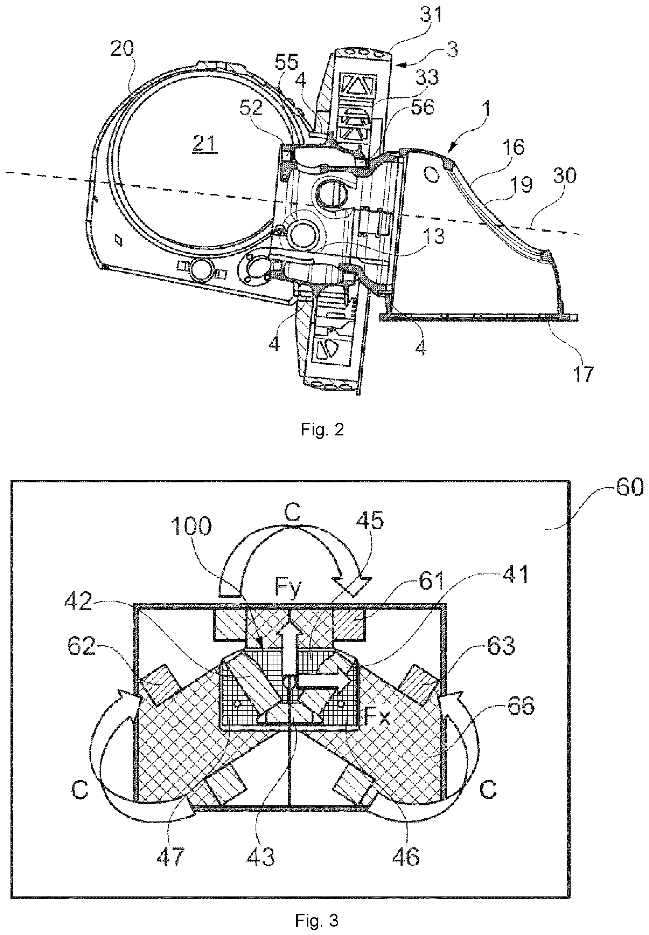

Figure 2 illustrates a simplified, internal cross-sectional view of the nacelle 16 and the rotor hub 20 of a direct-drive wind turbine 10. As shown, the generator 3 may be coupled to the rotor hub 20 of the wind turbine 10 for generating electrical power from the rotational energy generated. Thus, rotation of the rotor hub 20 directly drives the generator 3. Other wind turbine configuration using a gearbox in between the wind turbine rotor and the generator are also known.

It should be appreciated that frame 1 and generator 3 may generally be supported by a support frame or bedplate 17 positioned atop the wind turbine tower 15. The bedplate 17 may be a bottom portion of frame 1 or may be joined to a bottom flange of a frame 1. The bedplate 17 may be rotatably mounted on the wind turbine tower 15 to rotate the nacelle about the yaw axis (illustrated in figure 1).

The direct-drive wind turbine 10 of figure 2 comprises a generator 3 mounted on the frame 1. The generator 3 comprises a generator stator 33 and a generator rotor 31 configured to rotate about a rotation axis 30. The frame 1 in this example comprises a rear frame or rear frame portion 19 and a front frame or forwardly protruding frame 13. The front frame 13 may be integrally formed with the rear frame 19 or may be separately formed from the rear frame. If separately formed, fasteners 4 such as bolts may join the front frame 13 to the rear frame. The front frame 13 in this example extends forward beyond the generator 3. The rear frame connects the front frame 13 to the tower 15.

A rear portion of the frame 1 may be called main frame. A main frame may transfer the loads and the vibrations acting on the rotor 18 of a wind turbine 10 to the tower 15 of the wind turbine 10, see figure 1. A main frame may be made of cast steel. A main frame may have a bottom opening, a front opening and a rear opening. The bottom opening may enable passage between the main frame and an inside of the tower 15, the front opening may enable passage between the main frame and an inside 21 of the rotor hub 20, e.g. through a front portion 13, and the rear opening may enable passage between the main frame and an inside of the nacelle 16.

The front frame 13 in this example is attached to and carries the generator stator 33. The front frame 13 further supports a rotatable shaft 52.

In figure 2, the front frame 13 is an inner structure and the rotatable shaft 52 is an outer structure. In another example, the front frame 13 may be an outer structure and the rotating shaft 52 may be an inner structure. In both such examples the inner and the outer structure may rotate relative to each other and about the rotation axis 30.

The rotatable shaft 52 is rotatably supported on the front frame 13 through a front bearing 55 and a rear bearing 56. Both front and rear bearings may have rolling elements, such as balls or rollers. In some examples, the bearings may include a double tapered roller bearing. In other examples, the bearings may be journal bearings.

The rotating shaft 52 may be operatively connected to the rotor hub 20 through the generator rotor 31. The latter may be achieved, for instance, through a series of bolts 4. The bolts 4 may join the rotor hub 20, the outer structure 52 and the generator rotor 31 together in such a way that at least a part of the generator rotor 31 is sandwiched by the rotor hub 20 and the outer structure 52. The joint of this example may allow to transmit the rotating movement of the rotor hub 20 to the outer structure 52 through the generator rotor 31. In another example, the joint may be achieved through any suitable fasteners available or even through welding.

Figure 3 schematically illustrates a system for magnetizing a permanent magnet module 100 comprising permanent magnets in a substantially V-shaped axial configuration.

The system shown in figure 3 comprises a fixture 60 made of magnetic material. A magnetic material as used herein may be understood to be any ferromagnetic material. One suitable material for the fixture is steel.

The fixture 60 comprises a passage 66, and a permanent magnet module 100 can be provided in the passage 66, such that a section of the permanent magnet module 100 is arranged inside the fixture 60.

As shown in the example of figure 3, the permanent magnet module 100 comprises a first inclined magnet portion 41, a second inclined magnet portion 42 and a horizontal magnet portion 43. The first inclined magnet portion 41 and the second inclined magnet portion 42 form a first leg and a second leg of a V-shape respectively.

The first and second inclined magnet portions 41, 42 are substantially rectangular in an axial cross-section. In other examples, the first and second inclined magnet portions 41, 42 may have a substantially trapezoidal cross-section. Further, the horizontal magnet portion 43 has a rectangular cross-section with beveled edges.

Herein, an axial cross-section may be defined as the cross-section with a plane that is perpendicular to the rotational axis of the rotor and the rotational axis extends along the axial direction of the electrical machine, i.e. the plane defined by a radial direction

The permanent magnets may be made for example from AlNiCo steel (Aluminium-Nickel-Cobalt), rare earth magnetic materials such as neodymium (NdFeB), or samarium-cobalt, but may also be made from for example ceramic materials.

The permanent magnet module 100 may comprise several first permanent magnets 41 arranged along the axial direction in a row or second permanent magnets 42 arranged along the axial direction in a row or third permanent magnets 43 along the axial direction in a row. The axial length of these magnets may be similar.

It should be clear that other examples of permanent magnet modules 100 may not include a horizontal magnet 43 near a vertex of the V-shape.

As shown in the example of figure 3, the permanent magnet module 100 further comprises a base at least partially supporting the permanent magnets 41, 42, 43 and extending from a bottom adapted to be positioned on a rotor of an electrical machine to a top along a radial direction.

The base in the example of figure 3 comprises an upper pole piece 45, a first lateral wing 46 and a second lateral wing 47. The upper pole piece 45 has a substantially trapezoidal axial cross-section comprising a long side parallel to a short side and a first lateral side and a second lateral side connecting the long side to the short side. In this example, the horizontal magnet portion 43 is attached to the short side of the upper pole piece, the first permanent magnet 41 is attached to the first lateral side of the upper pole piece and the second permanent magnet is attached to the second lateral side of the upper pole piece.

In this example, the first lateral wing 46 and the second lateral wing 47 have a substantially right triangular cross-section. In this aspect, the first permanent magnet 41 may be arranged between the inclined side of the first lateral wing 46 and one of the inclined side of the upper pole piece 45, and the second permanent magnet 42 may be arranged between the inclined side of the second lateral wing 47 and the other one of the inclined side of the upper pole piece 45. In this way, the first permanent magnet 41 may be attached to the inclined side of the first lateral wing 46 and to one of the inclined side of the upper pole piece 45, and the second permanent magnet 42 to the other one of the inclined side of the upper pole piece 45. The attachment may be for example by gluing or bonding.

The system for magnetizing the permanent magnet module further comprises an open end magnetizing coil 61 arranged in a section of the passage 66, a first side magnetizing coil 63 arranged on a first side of the passage 66, and a second side magnetizing coil 62 arranged substantially on a second side of the passage 66.

In this way, when a section of a permanent magnet module 100 including permanent magnets having substantially a V-shape 41, 42, 43 in cross-section is received in the passage 66, the first side magnetizing coil 63 is arranged next to a first leg 41 of the V-shape, and the second side magnetizing coil 62 is arranged next to a second leg 42 of the V-shape. The open end magnetizing coil 61 is arranged near an open end of the V-shape.

In some examples, the first side magnetizing coil 63 may be arranged substantially parallel to the first leg 41 of the V-shape and the second side magnetizing coil 62 may be arranged substantially parallel to the second leg 42 of the V-shape. Further the open end magnetizing coil 61 may be arranged substantially parallel to a vertex of the V-shape. In other examples, the open end magnetizing coil 61 may be arranged substantially parallel to one of the first and second side magnetizing coils 62, 63. In further examples, the open end magnetizing coil 61 may be substantially perpendicular to the vertex of the V-shape.

The first and second legs 41, 42 of the V-shape may have a North on an inner side of the magnet, and a South on an outer side of the magnet. In use, this arrangement forces the magnetic flux towards the stator. The "next" permanent magnet module in an electrical machine may have the Souths on an inner side of the legs, and the Norths on an outer side of the legs.

In the example of figure 3, the magnets of the permanent magnet module 100 show a (non-inverted) V, so that the open end magnetizing coil 61 is an upper coil arranged in a top section of the passage 66.

In order to magnetize the magnets 41, 42, 43, the coils 61, 62, 63 are energized. When current C flows through the coils 61, 62, 63 a magnetic field may be created inside the coils. This generates magnetic forces Fx, Fy in the magnetizer fixture.

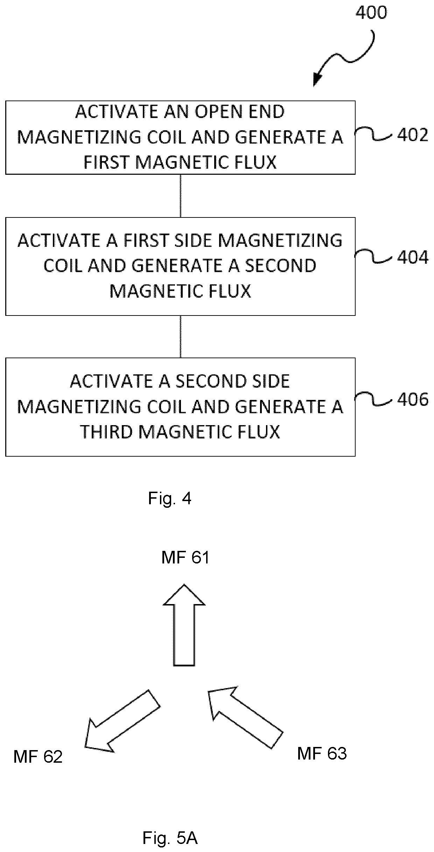

In an aspect of the present disclosure, a method 400 for magnetizing a section of one or more permanent magnets 41, 42, 43 arranged substantially in a V-shape is provided. Figure 4 shows a flow chart of the method 400.

The method 400 comprises applying a first magnetic field, comprising, at step 402, activating an open end magnetizing coil 61 arranged near an open end of the V-shape and generating a first magnetic flux MF61, at step 404, activating a first side magnetizing coil 63 arranged at a first side of a first leg 41 of the V-shape and generating a second magnetic flux MF63, and at step 406, activating a second side magnetizing coil 62 arranged at a second side of a second leg 42 of the V-shape and generating a third magnetic flux MF62. The magnetizing coils 61, 62, 63 are simultaneously activated, and the second side magnetizing coil 62 is activated in reversed polarity to the first side magnetizing coil 63.

When the lateral magnets are magnetized, high magnetic forces are produced. A coil connected with a reverse direction (such that is produces a magnetic field in an opposite direction to the other coil near the other lateral magnet) may reduce the forces during the magnetization process. A repelling effect of the magnetic fields may be achieved by the coil with reversed polarity. In the illustrated example, the magnetization of a portion of the permanent magnet may be effectively carried out while substantially reducing the forces. The magnetic field with opposed polarity does not affect the magnetization of either of the portions of the permanent magnet.

Since the magnetizer coil will need to handle lower forces, the reliability of the magnetization process will be increased and the life span of the coils may be longer. Post magnetization of the permanent magnets may be implemented without the prior art drawbacks.

The system may further comprise a source for energizing the magnetic coils 61, 62, 63 and a system for reversing the polarity of the coils i.e. for reversing the direction of the currents in the coils. In some examples, activation of the magnetizing coils may be carried out e.g. through discharge of an electrical capacitor.

The magnetomotive force (MMF) currents applied for magnetizing the permanent magnets may be between 300 - 650 kAmpere-turn (kAt). In particular, the magnetomotive force applied in the open end magnetizing coil 61 may be between 350 - 650 kAt, specifically 450 - 550 kAt, more specifically around 500 kAt.

In some examples, activating a first side magnetizing coil and a second side magnetizing coil may comprise applying a magnetomotive force which is 60 - 90 % of a magnetomotive force applied to activate the open end magnetizing coil, specifically which is 70 - 80 % of the magnetomotive force applied to activate the open end magnetizing coil. In some examples, the magnetomotive force applied in the first and second side magnetizing coils 63, 62 may be in the range of 300 - 500 kAt, specifically around 350 - 450 kAt, more specifically around 400 kAt.

In some examples, the first magnetic field may comprise magnetic flux lines substantially perpendicular to the first leg of the V-shape. The first leg of the V-shape may be magnetized.

In some examples, applying a first magnetic field may comprise activating the second side coil 62 in reversed polarity as compared to the open end magnetizing coil 61 and the first side coil 63, such that magnetic flux lines are substantially perpendicular to the first leg 41 of the V-shape.

In other examples, applying a first magnetic field may comprise activating the first side coil 63 in reverse polarity as compared to the open end magnetizing coil 61 and the second side coil 62, such that magnetic flux lines are substantially perpendicular to the second leg 42 of the V-shape.

Figure 5A schematically shows the direction of the magnetic fluxes MF created by each of the coils 61, 62, 63 of the system illustrated in figure 3, in an example wherein the second side coil 62 has reversed polarity as compared to the other coils 61, 63.

As may be seen in the schematic figure, the current direction of the magnetic flux MF created by the second side coil 62 is opposite to the current direction of the magnetic flux MF created by the first side coil 63. Currents in coils 63 and 62 may have similar magnitude e.g. 400 kA, but may be applied in reverse direction. The forces created in the magnetic fixture are relatively low e.g. the forces Fx in an x direction may be of 29 kN and the forces Fy in a y direction may be of 70 kN.

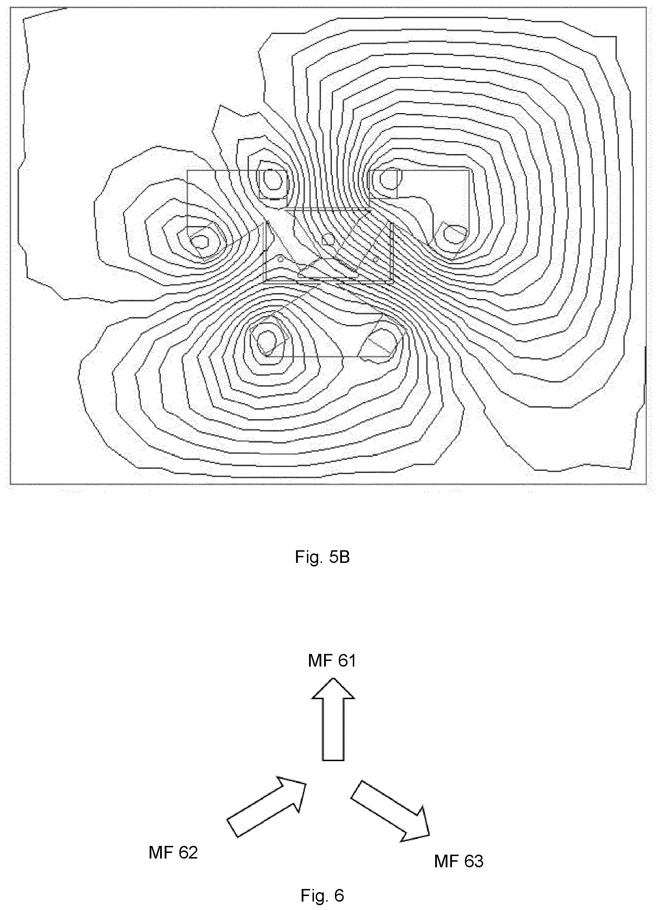

Figure 5B schematically illustrates magnetic flux lines generated by the magnetic fluxes MF illustrated in figure 5A. In particular, the figure illustrates magnetic flux lines during a magnetization pulse, i.e. a short period of time during which current is sent through the coils.

Figure 5B shows in detail how the magnetic flux lines may be arranged substantially in the magnetization direction for the first leg 41 of the V-shape, in this example, the leg on the right. As the second coil 62 has been activated in reversed polarity as compared to the other coils, magnetic flux lines are substantially perpendicular to the first leg 41 of the V-shape.

The magnetization pulse is far less effective for the second leg of the V-shape and the vertex of the V-shape, since the magnetic field is not perpendicular to the second leg and the vertex, i.e. the magnetic flux lines are not arranged along the desired magnetization direction.

In some examples, the first magnetic field may be applied during a period of between 1-50 ms, specifically between 5 and 20 ms.

After the first pulse, i.e. after applying the first magnetic field, a second magnetic field may be applied, such that magnetic flux lines are substantially perpendicular to the second leg of the V-shape.

Accordingly, the method 400 may further comprise removing the first magnetic field and applying a second magnetic field, by simultaneously activating the open end magnetizing coil 61, the first side magnetizing coil 63 and the second side magnetizing coil 62. The first and second magnetizing coils may be activated with opposite polarity compared to when applying the first magnetic field. Accordingly, the second magnetic field may comprise magnetic flux lines substantially perpendicular to a second portion of the V-shape.

In some examples, a first pulse may be aimed specifically to a first leg of the V-shape, for example the right leg 41, and a second pulse may be aimed specifically at a second leg of the V-shape, for example the left leg 42.

Figure 6 schematically shows the direction of the magnetic fluxes MF created by each of the coils 61, 62, 63 of the system illustrated in figure 3, in an example wherein the first side coil 63 has reversed polarity as compared to the other coils 61, 62. As a result, magnetic flux lines substantially perpendicular to the second leg 42 of the V-shape, in this example the left leg of the V-shape, may be obtained while at the same time the forces created in the magnetic fixture are relatively low.

In the shown examples, the permanent magnets arranged substantially in a V-shape are part of a permanent magnet module, but in other examples, a V-shape of magnets may be found in other applications.

After magnetizing a first section of the permanent magnets arranged substantially in a V-shape, a subsequent section may be magnetized. The method may further comprise axially moving the permanent magnet module prior to magnetizing the further section of the permanent magnets.

In some examples, after magnetizing one section of the permanent magnet module 100, the permanent magnet module 100 may be axially displaced with respect to the fixture 60. A subsequent section of the module may then be magnetized. In each magnetization step, a length of e.g. 5-30 cm, specifically 10 - 20 cm length of the module may be magnetized. A length of a permanent magnet module 100 may be e.g. 50 cm to 2 meters, specifically about 1 meter.

In another aspect of the present disclosure, a method for magnetizing a permanent magnet module having one or more magnets substantially in a V-shape including a first leg and a second leg is provided.

The method comprises positioning the permanent magnet module 100 such that a section of the permanent magnet module is positioned below an upper magnetizing coil 61 and between a first side magnetizing coil 63 and a second side magnetizing coil 62. The method further comprises, in a first step, simultaneously energizing the upper magnetizing coil 61, the first side magnetizing coil 63 and the second side magnetizing coil 62, wherein the first side magnetizing coil has opposite polarity to the second magnetizing coil. The method further comprises subsequently in a second step, simultaneously energizing the upper magnetizing coil 61, the first side magnetizing coil 63 and the second side magnetizing coil 62, wherein the first and second side magnetizing coils 63, 62 have opposed polarity to the first step.

In some examples, the method may further comprise repositioning the permanent magnet module 100 such that another section of the permanent magnet module is positioned bellow the upper magnetizing coil 63.

The upper magnetizing coil and the first and second side magnetizing coils may be arranged in a channel in a magnetic fixture. In some examples, the method may comprise moving the permanent module 100 through the passage of the fixture 60. In some examples, repositioning the permanent magnet module may comprise sliding the permanent magnet module within the fixture.

The permanent magnet module may be repositioned so that a next section of the module may be magnetized. This process may continue until the permanent magnet module has been magnetized, i.e. through its entire length.

A magnetized permanent magnet module may be used in an electrical machine, and particularly in a generator. The permanent magnet modules may be used in a generator of a wind turbine. In some examples, the generator may be a direct-wind turbine generator.

In a further aspect of the present disclosure, a system is provided. The system comprises a fixture 60 made of magnetic material and comprising a passage 66 for receiving a permanent magnet module 100 comprising permanent magnets 41, 42, 43 arranged in a V-shape having a first leg 41 and a second leg 42 and an open end between the first and second legs. The system further comprises an open end magnetizing coil 61 arranged to be near the open end of the V-shape when the permanent magnet module is arranged in the passage 66, a first side magnetizing coil 63 on a first side of the passage arranged substantially parallel to the first leg when the permanent magnet module 100 is arranged in the passage 66, and a second magnetizing coil 62 on a second side of the passage arranged substantially parallel to the second leg when the permanent magnet module 100 is arranged in the passage 66. The system further comprises a control system to energize the open end magnetizing coil 61, the first side magnetizing coil 63 and the second side magnetizing coil 62 in accordance to any of the examples of the aforementioned method 400.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (400) for magnetizing a section of one or more permanent magnets (41, 42, 43) arranged substantially in a V-shape, comprising applying a first magnetic field including:
activating (402) an open end magnetizing coil (61) arranged near an open end of the V-shape and generating a first magnetic flux (MF61);
activating (404) a first side magnetizing coil (63) arranged at a first side of a first leg (41) of the V-shape and generating a second magnetic flux (MF63); and
activating (406) a second side magnetizing coil (62) arranged at a second side of a second leg (42) of the V-shape and generating a third magnetic flux (MF62),
wherein the magnetizing coils (61, 62, 63) are simultaneously activated, and wherein the second side magnetizing coil (62) is activated in reversed polarity to the first side magnetizing coil (63).

2. The method (400) of claim 1, wherein the first magnetic field comprises magnetic flux lines substantially perpendicular to the first leg (41) of the V-shape.

3. The method (400) of claim 1 or 2, further comprising:
removing the first magnetic field;
applying a second magnetic field, by simultaneously activating the open end magnetizing coil (61), the first side magnetizing coil (63) and the second side magnetizing coil (62);
wherein the first and second side coils (63, 62) are activated with opposite polarity to when applying the first magnetic field.

4. The method (400) of any of claims 1-3, wherein the permanent magnets arranged substantially in a V-shape are part of a permanent magnet module (100).

5. The method (400) of claim 4, wherein the permanent magnet module (100) comprises a first inclined magnet portion, a second inclined magnet portion and a horizontal magnet portion.

6. The method (400) of any of claims 1-5, wherein the first magnetic field is applied during a period of between 1-50 ms, specifically between 5 and 20 ms.

7. The method (400) of any of claims 1-6, wherein the first side magnetizing coil (63) is arranged substantially parallel to the first leg (41) of the V-shape and wherein the second side magnetizing coil (62) is arranged substantially parallel to the second leg (42) of the V-shape.

8. The method (400) of any of claims 1-7, wherein the open end magnetizing coil (61) is arranged substantially parallel to a vertex of the V-shape.

9. A method for magnetizing a permanent magnet module (100) having one or more magnets (41, 42, 43) substantially in a V-shape including a first leg (41) and a second leg (42), comprising:
positioning the permanent magnet module (100) such that a section of the permanent magnet module (100) is positioned below an upper magnetizing coil (61) and between a first side magnetizing coil (63) and a second side magnetizing coil (62); and
carrying out a method according to claim 3.

10. The method according to claim 9, wherein the upper magnetizing coil (61) and the first and second side magnetizing coils (63, 62) are arranged in a channel in a magnetic fixture.

11. The method according to claim 9 or 10, further comprising repositioning the permanent magnet module (100) such that another section of the permanent magnet module is positioned below the upper magnetizing coil (61).

12. The method according to any of claims 9 - 11, wherein the permanent magnet module (100) includes a horizontal magnet (43) near a vertex of the V-shape.

13. A system comprising:
a fixture (60) made of magnetic material and comprising a passage (66) for receiving a permanent magnet module (100) comprising permanent magnets (41, 42, 43) arranged in a V-shape having a first leg (41) and a second leg (42) and an open end between the first and second legs,
an open end magnetizing coil (61) arranged to be near the open end of the V-shape when the permanent magnet module (100) is arranged in the passage (66),
a first side magnetizing coil (63) on a first side of the passage (66) arranged substantially parallel to the first leg (41) when the permanent magnet module (100) is arranged in the passage (66), and
a second side magnetizing coil (62) on a second side of the passage (66) arranged substantially parallel to the second leg (42) when the permanent magnet module (100) is arranged in the passage,
and a control system to energize the open end magnetizing coil (61), the first side magnetizing coil (63), and the second side magnetizing coil (62) to apply a first magnetic field to magnetize the first leg (41), and
to energize the open end magnetizing coil (61), the first side magnetizing coil (63) and the second side magnetizing coil (62) to apply a second magnetic field to magnetize the second leg (42), wherein
the first and second side magnetizing coils (63, 62) are activated with opposing polarity when applying the first and second magnetic fields.

14. The system according to claim 13, further comprising a transport system for moving the permanent magnet module (100) through the passage.

15. The system according to any of claim 13 or 14, wherein the control system comprises a source for energizing the magnetizing coils and a system for reversing the polarity of the coils.
